# EUROPÄISCHE PATENTSCHRIFT

(11) **EP 2 811 185 B1**
(45) Veröffentlichungstag und Bekanntmachung des Hinweises auf die Patenterteilung: **12.04.2017**
(21) Anmeldenummer: 14169899.3
(22) Anmeldetag: 26.05.2014
(51) Int. Cl.: F16C 17/10, F16C 33/10, F16C 33/12, F16C 33/20

(54) **Bundbuchse**
Flange sleeve
Douille à collet

(30) Priorität: 28.05.2013 DE 102013209922
(43) Veröffentlichungstag der Anmeldung: 10.12.2014
(73) Patentinhaber: KS Gleitlager GmbH, 68789 St. Leon-Rot (DE)
(72) Erfinder: Häcker, Stefan, 76698 Ubstadt-Weiher (DE); Scarpino, Nicoló, 67167 Erpolzheim (DE); Hertel, Alfred, 35066 Frankenberg (DE); Reinicke, Rolf, Dr., 76669 Bad Schönborn (DE); Haug, Michael, 74906 Bad Rappenau (DE)
(74) Vertreter: DREISS Patentanwälte PartG mbB

(56) Entgegenhaltungen:
- EP-A2- 0 444 754
- WO-A2-2005/048680
- DE-A1- 19 636 419
- DE-A1- 19 823 316
- DE-A1-102006 059 329

## Beschreibung

Die Erfindung betrifft eine gebaute Bundbuchse zur Lagerung einer Antriebswelle in einer Dieseleinspritzpumpe, mit einem zylindrischen Radiallagerteil und einem ringscheibenförmigen Axiallagerteil, der in einer Umfangsrichtung einstückig ausgeführt ist und stoffschlüssig und unlösbar an den Radiallagerteil angefügt ist und eine Wellendurchgangsöffnung aufweist. Eine derartige Bundbuchse ist bekannt aus DE 198 23 316 A1 und dort zur Lagerung einer Nockenwelle beschrieben.

Eine gebaute Bundbuchse umfasst typischerweise einen Radiallagerteil und einen Axiallagerteil, welche in einem Herstellungsprozess zusammengefügt werden. Der Radiallagerteil dient zur Lagerung der Welle in einer radialen Richtung, während der Axiallagerteil zur axialen Abstützung eines Hubrings und eines Exzenters auf der Welle gegen ein Gehäuse bzw. einen Flansch dient.

WO 2006/089721 zeigt eine nicht gattungsgemäße Bundbuchse, bei der der Axiallagerteil aus zwei Halbteilen besteht, zwischen welchen sich zwei radiale Trennfugen bilden. Hierdurch ist die Ausbildung eines hydrodynamisch geschlossenen Schmierfilms und damit tribologisch vorteilhafter Bedingungen schwer möglich. Bei DE 10 2004 063 660 A1 sind drei Axiallagerteile vorgesehen, die federnde Funktion haben sollen und außerdem Abstufungen in der Gleitschicht aufweisen.

EP 0 444 754 A2 zeigt eine Bundbuchse, bei der der Axiallagerteil mechanisch an den Radiallagerteil angefügt wird, indem in dem ringscheibenförmigen Axiallagerteil radial innen zungenartige Vorsprünge gebildet werden, die axial umgebogen werden und dann in Ausnehmungen an dem Radiallagerteil eingeklipst werden. Die zungenartigen Vorsprünge sind vor dem Umbiegen beidseits flankiert durch Ausschnitte, in welche ein Instrument zum Umbiegen der zungenartigen Vorsprünge eintauchen kann.

Aufgabe der vorliegenden Erfindung ist es eine gebaute Bundbuchse zu schaffen, die kostengünstig herstellbar ist und für den Einsatz zur Lagerung einer Antriebswelle in einer Dieseleinspritzpumpe geeignet ist.

Diese Aufgabe wird durch eine Bundbuchse mit den Merkmalen des Anspruchs 1 gelöst. Vorteilhafte Weiterbildungen sind in den abhängigen Ansprüchen angegeben. Darüber hinaus finden sich für die Erfindung wichtige Merkmale auch in der nachfolgenden Beschreibung und in der Zeichnung. Dabei können die Merkmale sowohl in Alleinstellung als auch in beliebiger Kombination für die Erfindung wichtig sein.

Die erfindungsgemäße Ausbildung der gebauten Bundbuchse hat den Vorteil, dass durch die Öffnungserweiterung, die einen Durchbruch durch den in Umfangsrichtung einstückig durchgehenden also in Umfangsrichtung geschlossenen Axiallagerteil bildet, ein verbesserter Fluss von Schmierstoff an die gleitenden Flächen erreicht werden kann. Die gleitenden Flächen sind dabei, sowohl eine Kontaktfläche zwischen der Antriebswelle und dem Radiallagerteil, wie auch eine Kontaktfläche zwischen dem Axiallagerteil und dem Hubring, als auch eine Kontaktfläche zwischen dem Axiallagerteil und dem Exzenter.

Hierbei wird bei Dieseleinspritzpumpen regelmäßig Brennstoff, welcher zum Antrieb eines Dieselmotors verbrannt wird, als Schmierstoff genutzt. Dabei ist es für die Schmierung besonders wichtig, dass der Schmier- bzw. Brennstoff einen geschlossenen Schmierfilm bildet. Der Schmierstoff wird bei der erfindungsgemäßen Bundbuchse über eine Aussparung im Gehäuse, beispielsweise in Form einer Längsnut, oder einer Zuführbohrung im Gehäuse vom Außenumfang der Bundbuchse her zugeführt und durch die Öffnungserweiterung hindurch an die Gleitflächen geleitet. Durch die vorzugsweise kontinuierliche Schmiermittelzuführung und Schmiermittelabführung durch die Öffnungserweiterung hindurch wird auch eine Kühlung der Lagerstelle realisiert.

In einer Weiterbildung der erfindungsgemäßen Bundbuchse erweist es sich als vorteilhaft, dass die Öffnungserweiterung einen Querschnitt aufweist, welcher die Form eines Rechtecks mit abgerundeten Ecken oder eines Kreissegments hat. Eine solche Form der Öffnungserweiterung bietet den Vorteil, dass die erfindungsgemäße Bundbuchse kostengünstig mittels eines Stanzverfahrens herstellbar ist. Überdies ist hierdurch ein großer Öffnungsquerschnitt realisierbar.

Vorteilhaft ist auch eine Ausbildung der erfindungsgemäßen Bundbuchse, bei welcher die Bundbuchse eine, sich vom Umfang des Radiallagerteils in radialer Richtung auswärts erstreckende, lichte axiale Gesamtdurchtrittsfläche aufweist, welche eine Fläche zwischen 10 mm² und 60 mm², insbesondere zwischen 15 mm² und 50 mm² und weiter insbesondere zwischen 20 mm² und 40 mm², hat. Hierdurch wird ein ausreichender Transport von Schmierstoff gewährleistet bei gleichzeitig ausreichender mechanischer Stabilität der Bundbuchse.

Die flächenhafte Erstreckung einer Öffnungserweiterung, welche in radialer Richtung außerhalb des Umfangs des Radiallagerteils liegt und orthogonal zur axialen Richtung verläuft, bildet eine axiale lichte Durchtrittsfläche dieser Öffnungserweiterung. Weist die Bundbuchse genau eine Öffnungserweiterung auf, so ist die axiale lichte Gesamtdurchtrittsfläche der Bundbuchse gleich der axialen lichten Durchtrittsfläche dieser einen Öffnungserweiterung. Weist die Bundbuchse mehr als eine Öffnungserweiterung auf, so ist die axiale lichte Gesamtdurchtrittsfläche der Bundbuchse gleich der Summe der einzelnen axialen lichten Durchtrittsflächen der Öffnungserweiterungen.

In weiterer Ausbildung der erfindungsgemäßen Bundbuchse, weist die Bundbuchse eine radiale Gesamtdurchtrittsfläche auf mit einer Fläche zwischen 10 mm² und 60 mm², insbesondere zwischen 15 mm² und 50 mm² und weiter insbesondere zwischen 20 mm² und 40 mm². Hierdurch wird ein ausreichender Transport von Schmierstoff in radialer Richtung zwischen die gelagerte Welle und den Radiallagerteil gewährleistet.

Die Fläche in einer Öffnungserweiterung, welche durch die Materialstärke des Axiallagerteils und eine umfängliche Wirkweite einer Öffnungserweiterung aufgespannt wird und orthogonal zur radialen Richtung verläuft, bildet diese radiale Durchtrittsfläche dieser Öffnungserweiterung. Die umfängliche Wirkweite der Öffnungserweiterung ist also die kleinste Umfangslänge der Öffnungsweiterung im Bereich zwischen Innenseite und Außenseite des Radiallagerteils. Oder mit anderen Worten: Bei axialer Blickrichtung entspricht die umfängliche Wirkweite einer Öffnungserweiterung der kleinsten Erstreckung der Öffnungserweiterung in Umfangsrichtung, und zwar in dem Bereich, welcher in radialer Richtung gesehen zwischen einem äußeren Umfang der Wellendurchgangsöffnung (also der Innenseite des Radiallagerteils) und dem Umfang des Radiallagerteils (also der Außenseite des Radiallagerteils) liegt.

Weist die Bundbuchse genau eine Öffnungserweiterung auf, so ist die radiale Gesamtdurchtrittsfläche der Bundbuchse gleich der radialen Durchtrittsfläche dieser einen Öffnungserweiterung. Weist die Bundbuchse mehr als eine Öffnungserweiterung auf, so entspricht die Gesamtdurchtrittsfläche der Bundbuchse der Summe der einzelnen radialen Durchtrittsflächen der Öffnungserweiterungen.

Bei einem Axiallagerteil mit einer geringen Materialstärke ist es vorteilhaft mehrere Öffnungserweiterungen vorzusehen auf die sich die radiale Gesamtdurchtrittsfläche verteilt, insbesondere im Hinblick auf eine gleichmäßige Schmierstoffverteilung und Stabilität der Bundbuchse. Vorteilhaft ist auch eine Ausbildung der erfindungsgemäßen Bundbuchse, bei welcher die radiale Gesamtdurchtrittsfläche und die axiale lichte Gesamtdurchtrittsfläche im Wesentlichen gleich groß sind. Bei gleicher Größe bieten beide Flächen gleichen Widerstand gegen eine Durchströmung mit Schmierstoff.

Nach einem weiteren Erfindungsgedanken wird vorgeschlagen, dass sich die wenigstens eine Öffnungserweiterung in radialer Richtung bis höchstens zum 0,5-fachen, insbesondere bis höchstens zum 0,4-fachen der radialen Breite des Axiallagerteils erstreckt. Dabei wird die radiale Breite des Axiallagerteils vom kreisförmigen Innenumfangsrand des Axiallagerteils bis zum kreisförmigen Außenumfangsrand des Axiallagerteils gemessen. Somit bleibt das Axiallagerteil und seine Gleitseite über wenigstens das 0,5-fache seiner Breite, vorzugsweise über wenigstens 0,6-fache seiner Breite in Umfangsrichtung ununterbrochen; es tritt also in Umfangsrichtung in diesem radial äußeren Bereich, radial außerhalb der Öffnungserweiterungen keine Trennfuge bei dem Axiallagerteil auf, so dass in diesem Bereich in Umfangsrichtung ein durchgehender ununterbrochener Schmiermittelfilm aufrechterhalten werden kann, was sich tribologisch vorteilhaft auswirkt.

In weiterer Ausbildung der erfindungsgemäßen Bundbuchse weist diese mindestens eine Öffnungserweiterung auf, bei welcher die axiale lichte Durchtrittsfläche und die radiale Durchtrittsfläche im Wesentlichen gleich groß sind. Diese geometrische Beschaffenheit der Öffnungserweiterung ist Strömungsdynamisch für den Fluss von Schmierstoff durch die Öffnungserweiterung besonders günstig.

Vorteilhaft ist auch eine Ausbildung der erfindungsgemäßen Bundbuchse, bei welcher zwei, drei oder vorzugsweise vier Öffnungserweiterungen vorgesehen sind und diese in Umfangsrichtung vorzugsweise äquidistant zueinander angeordnet sind. Hierdurch wird zusätzlich der Schmiermitteltransport verbessert. Eine gleichmäßige Schmiermittelverteilung in Umfangsrichtung ist insbesondere durch die in Umfangsrichtung äquidistante Anordnung der Öffnungserweiterungen gewährleistet.

In weiterer Ausbildung der erfindungsgemäßen Bundbuchse erweist es sich als vorteilhaft, dass der Axiallagerteil eine Stützschicht und eine Gleitschicht aufweist und der Radiallagerteil eine Stützschicht und eine Gleitschicht aufweist. Eine solche mindestens zweischichtige Aufbauweise des Axiallagerteils sowie des Radiallagerteils hat den Vorteil, dass gute Gleiteigenschaften der jeweiligen Gleitschichten mit hoher mechanischer Stabilität der jeweiligen Stützschichten kombiniert werden können. Beispielsweise können die Stützschichten der beiden Bauteile unter Verwendung eines metallischen Werkstoffs, beispielsweise Stahl, ausgeführt werden. Die Gleitschichten können beispielsweise als füllstoffverstärkte Polymerschichten, insbesondere PEEK-Schichten (Polyetheretherketon) oder PTFE-Schichten (Polytetrafluorethylen), ausgeführt sein. Dabei bildet PEEK bzw. PTFE die Polymermatrix bzw. -basis. Diese Materialangaben sind jedoch nicht limitierend zu verstehen.

Weiter erweist es sich als vorteilhaft, wenn die Gleitschicht eine auf der Stützschicht festgelegte poröse Verankerungsschicht, insbesondere aus Bronze, insbesondere in Form einer Sinterschicht, umfasst, in die das Polymer basierte Gleitschichtmaterial eingebracht ist.

Weiter erweist es sich als vorteilhaft, wenn die Gleitschicht des Radiallagerteils und des Axiallagerteils verschiedene Polymer basierte Gleitschichtmaterialien aufweisen, insbesondere der Radiallagerteil ein PEEK basiertes Gleitschichtmaterial und der Axiallagerteil ein PTFE basiertes Gleitschichtmaterial aufweist.

Im Sinne der Erfindung ist ebenso, dass der Axiallagerteil stoffschlüssig, insbesondere mittels mindestens einer Schweiß- oder Lötverbindung, an den Radiallagerteil angefügt ist. Eine stoffschlüssige Verbindung des Axiallagerteils mit dem Radiallagerteil hat den Vorteil, dass eine besonders hohe Lebensdauer der Bundbuchse gewährleistet ist. Überdies ist eine so ausgeformte Bundbuchse kostengünstig herstellbar.

Erfindungsgemäß ist ebenso ein Verfahren zur Herstellung einer gebauten Bundbuchse mit folgenden Schritten: Herstellen eines zylindrischen Radiallagerteils durch Rollbiegen eines streifenförmigen Flachmaterialabschnitts; Herstellen des ringscheibenförmigen Axiallagerteils durch Stanzen der Wellendurchgangsöffnung in ein planes Werkstück; und stoffschlüssiges Verbinden des Radiallagerteils und des Axiallagerteils, dadurch gekennzeichnet, dass beim Stanzen der Wellendurchgangsöffnung ein Stempel verwendet wird, der die Wellendurchgangsöffnung mit wenigstens einer radial auswärts gerichteten Öffnungserweiterung ausstanzt und sich diese Öffnungserweiterung in radialer Richtung über den äußeren Umfang des Radiallagerteils hinaus erstreckt. Die Herstellung nach dem erfindungsgemäßen Verfahren hat den Vorteil, dass die Wellendurchgangsöffnung im Axiallagerteil in einem einzigen Arbeitsschritt realisiert wird. Dies ist kostengünstig und effizient.

Nachfolgend wird eine Ausführungsform der erfindungsgemäßen Bundbuchse unter Bezugnahme auf die beiliegende Zeichnung beispielhaft erläutert. In der Zeichnung zeigt:
Figur 1 Eine perspektivische Darstellung einer erfindungsgemäßen Bundbuchse;
Figur 2 eine perspektivische Darstellung der erfindungsgemäßen Bundbuchse aus einer anderen Blickrichtung;
Figur 3 eine Schnittdarstellung entlang einer Längsachse der erfindungsgemäßen Bundbuchse;
Figur 4 eine vergrößerte Darstellung eines Teilbereichs IV der in Figur 3 dargestellten Bundbuchse;
Figur 5 eine vergrößerte Darstellung eines Teilbereichs der in Figur 3 dargestellten Bundbuchse in einem eingebauten Zustand; und
Figur 6 eine Aufsicht auf die in Figur 1 bis 3 dargestellte Bundbuchse in einer axialer Richtung gesehen.

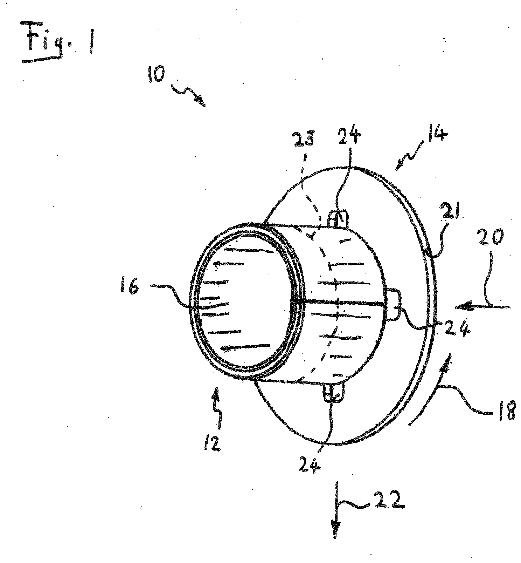

Eine Ausführungsform einer erfindungsgemäßen Bundbuchse ist in Figur 1 dargestellt, wobei die Bundbuchse insgesamt das Bezugszeichen 10 trägt. Ein Radiallagerteil 12 ist mit einem Axiallagerteil 14 stoffschlüssig verbunden. Der Radiallagerteil 12 ist hohlzylindrisch ausgeführt und bildet eine Wellendurchgangsöffnung 16. Die Wellendurchgangsöffnung 16 erstreckt sich in Form einer kreiszylindrischen Durchgangsöffnung durch den Axiallagerteil 14 hindurch. Der Axiallagerteil 14 hat also die Form einer in Umfangsrichtung einstückig über 360° durchgehenden, und bis auf noch zu erläuternde radiale Öffnungserweiterungen unterbrechungsfreien Ringscheibe.

Eine Umfangsrichtung ist durch einen gekrümmten Pfeil mit dem Bezugszeichen 18 angegebenen. Eine axiale Richtung ist durch einen Pfeil mit dem Bezugszeichen 20 dargestellt. Eine Materialstärke 21 des Axiallagerteils 14 entspricht dessen räumlicher Ausdehnung in der axialen Richtung 20. Eine radiale Richtung ist durch einen Pfeil mit dem Bezugszeichen 22 dargestellt. Ein äußerer Umfang des Radiallagerteils 12 trägt das Bezugszeichen 23.

Die Wellendurchgangsöffnung 16 in dem Axiallagerteil 14 weist beispielhaft vier Öffnungserweiterungen 24 auf. Die Öffnungserweiterungen 24 sind ausgehend von der Wellendurchgangsöffnung 16 radial auswärts erstreckt. Sie erstrecken sich in radialer Richtung 22 über den äußeren Umfang 23 des Radiallagerteils hinaus. In axialer Richtung 20 erstrecken sich die Öffnungserweiterungen 24 durch die gesamte Materialstärke 21 des Axiallagerteils. Die Öffnungserweiterungen 24 weisen hier beispielhaft einen Querschnitt auf, welcher die Form eines Rechtecks mit abgerundeten Ecken hat.

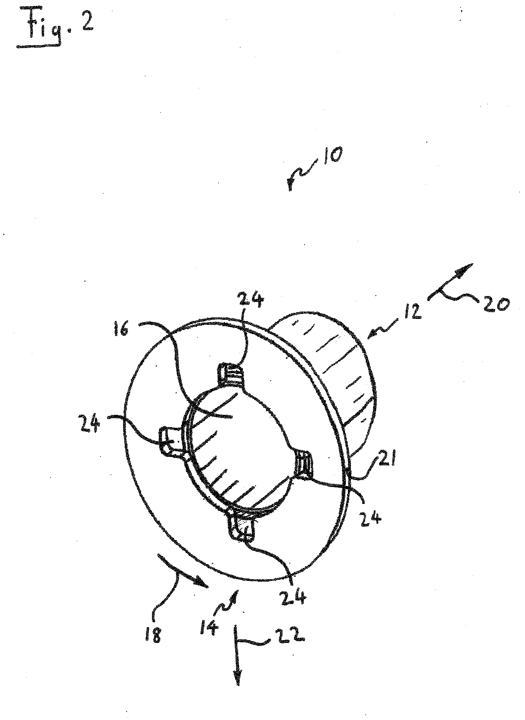

Wie am besten aus Figur 2 ersichtlich sind die vier Öffnungserweiterungen 24 in Umfangsrichtung 18 vorzugsweise äquidistant zueinander angeordnet.

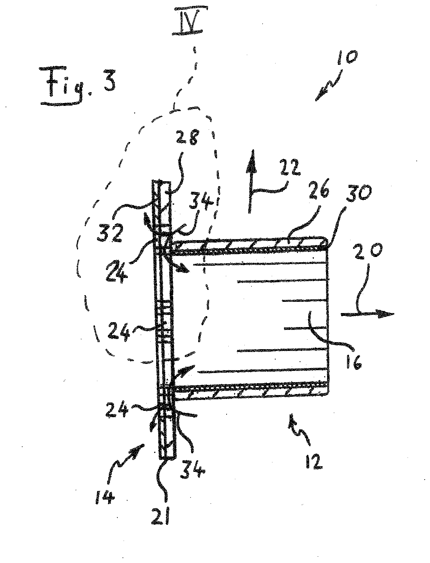

Ein zweischichtiger Aufbau der erfindungsgemäßen Bundbuchse 10 ist am besten aus Figur 3 ersichtlich. Der Radiallagerteil 12 umfasst eine Stützschicht 26 und der Axiallagerteil 14 umfasst eine Stützschicht 28. Beide Stützschichten 26, 28 sind beispielhaft unter Verwendung von Stahl hergestellt. Weiter umfasst der Radiallagerteil 12 radial innen eine Gleitschicht 30 und der Axiallagerteil 14 axial außen eine Gleitschicht 32 der eingangs beschriebenen Art.

Die Öffnungserweiterungen 24 ermöglichen einen Schmiermittelfluss. Dieser Schmiermittelfluss ist durch Pfeile mit dem Bezugszeichen 34 angedeutet.

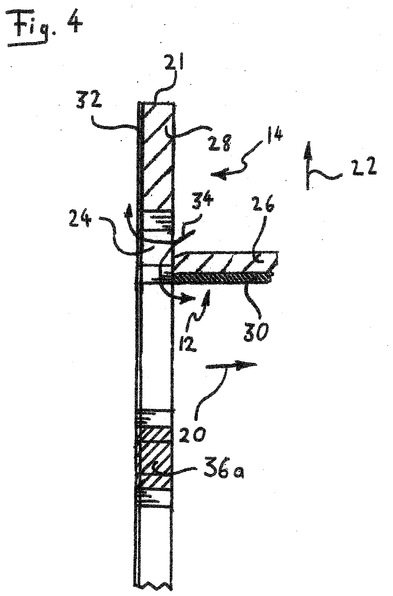

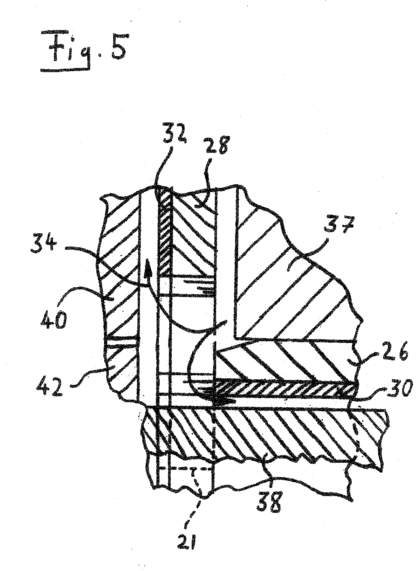

Figur 4 zeigt einen in Figur 3 mit IV markierten Teilbereich. Eine radiale Durchtrittsfläche 36a einer der zwei dargestellten Öffnungserweiterungen 24 ist aus radialer Blickrichtung gesehen und schraffiert dargestellt. Gemäß Figur 5 ist ein Teil eines Pumpengehäuses mit dem Bezugszeichen 37 dargestellt und eine Antriebswelle ist teilweise dargestellt und trägt das Bezugszeichen 38. Ein teilweise dargestellter Hubring trägt das Bezugszeichen 40. Auf der Antriebswelle sitzt ein teilweise dargestellter Exzenter 42.

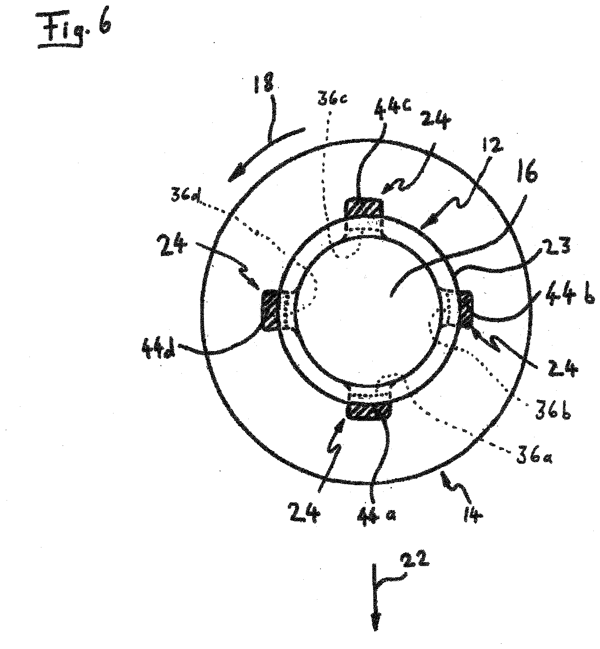

In Figur 6 sind axiale lichte Durchtrittsflächen 44a, b, c, d der Öffnungserweiterungen 24 schraffiert dargestellt. Die axialen lichten Durchtrittsflächen 44a, b, c, d werden jeweils durch den Teil der Öffnungserweiterungen 24 gebildet, welcher radial außerhalb des Umfangs 23 des Radiallagerteils 12 liegt. Eine Gesamtdurchtrittsfläche 44a-d entspricht der flächenmäßigen Summe der einzelnen Durchtrittsflächen 44a, b, c, d.

Die radialen Durchtrittsflächen 36a, b, c, d aller vier Öffnungserweiterungen 24 der beispielhaften Bundbuchse 10 sind in Figur 6 durch gekrümmte in Umfangsrichtung verlaufende punktierte Linien dargestellt, da sie orthogonal zur radialen Richtung 22 und zur Zeichnungsebene verlaufen. Diese punktierten Linien stellen eine jeweilige Wirkweite der Öffnungserweiterung dar, also die kleinste Umfangslänge der Öffnungsweiterung im Bereich zwischen Innenseite und Außenseite des Radiallagerteils. Die Summe der einzelnen radialen Durchtrittsflächen 36a, b, c, d bildet die radiale Gesamtdurchtrittsfläche 36a-d der Buchse.

Bei Verwendung der erfindungsgemäßen Bundbuchse 10 in einer Dieseleinspritzpumpe liegt die Bundbuchse 10 mit der Gleitschicht 32 des Axiallagerteils 14 an einem Teil des Hubrings 40 und einem Teil des Exzenters 42 an. Die Antriebswelle 38 der Dieseleinspritzpumpe ist in die Wellendruchgangsöffnung 16 eingeführt. Über die Öffnungserweiterungen 24 kann Schmierstoff, welcher von radial außen, beispielsweise über eine Aussparung oder eine Zuführbohrung im Gehäuse, an die Bundbuchse herangeführt wird, durch die axiale lichte Gesamtdurchtrittsfläche 44a-d hindurchtreten. Von dort kann er dann in den Axiallagerspalt, also zwischen die Gleitschicht 32 des Axiallagerteils 14 und den Hubring 40 bzw. den Exzenter 42, gelangen und für Schmierung sorgen. Ebenso kann er dann durch die radialen Durchtrittsflächen 36a,b,c,d hindurchtreten und zwischen die Antriebswelle 38 und die Gleitschicht 30 des Radiallagerteils 12 gelangen und dort für Schmierung sorgen. Dies ist schematisch in Figur 3 bis 5 durch die Pfeile mit dem Bezugszeichen 34 dargestellt. Die Öffnungserweiterungen und deren axiale und radiale Durchtrittsflächen erlauben ein Zuführen aber auch ein Abführen von Schmierstoff, so dass eine effektive Kühlung der Lagerstelle erreicht wird.

## Patentansprüche

1. Gebaute Bundbuchse (10) zur Lagerung einer Antriebswelle (38) in einer Dieseleinspritzpumpe, mit einem zylindrischen Radiallagerteil (12) und einem ringscheibenförmigen Axiallagerteil (14), der in einer Umfangsrichtung (18) einstückig ausgeführt ist und stoffschlüssig und unlösbar an den Radiallagerteil (12) angefügt ist und eine Wellendurchgangsöffnung (16) aufweist, wobei ausgehend von der Wellendurchgangsöffnung (16) wenigstens eine radial auswärts gerichtete und eine gesamte Materialstärke (21) des Axiallagerteils (14) erfassende Öffnungserweiterung (24) in dem Axiallagerteil (14) vorgesehen ist, **dadurch gekennzeichnet, dass** die Öffnungserweiterung(24) sich in einer radialen Richtung (22) über einen äußeren Umfang (23) des Radiallagerteils (12) hinaus erstreckt und dass die Bundbuchse eine sich vom Umfang (23) in radialer Richtung (22) auswärts erstreckende axiale lichte Gesamtdurchtrittsfläche (44a-d) der Öffnungserweiterung (24) zwischen 10 mm² und 60 mm² aufweist und eine radiale Gesamtdurchtrittsfläche (36a-d) der Öffnungserweiterung (24) aufweist mit einer Fläche zwischen 10 mm² und 60 mm².

2. Bundbuchse nach Anspruch 1, **dadurch gekennzeichnet, dass** die Öffnungserweiterung (24) einen Querschnitt aufweist, welcher die Form eines Rechtecks mit abgerundeten Ecken oder eines Kreissegments hat.

3. Bundbuchse nach Anspruch 1 oder Anspruch 2, **dadurch gekennzeichnet, dass** die sich vom Umfang (23) in radialer Richtung (22) auswärts erstreckende axiale lichte Gesamtdurchtrittsfläche (44a-d) zwischen 15 mm² und 50 mm² und weiter insbesondere zwischen 20 mm² und 40 mm² beträgt.

4. Bundbuchse nach einem oder mehreren der vorangegangenen Ansprüche, **dadurch gekennzeichnet, dass** die radiale Gesamtdurchtrittsfläche (36a-d) zwischen 15 mm² und 50 mm² und weiter insbesondere zwischen 20 mm² und 40 mm² beträgt.

5. Bundbuchse nach einem oder mehreren der vorangegangenen Ansprüche, **dadurch gekennzeichnet, dass** die radiale Gesamtdurchtrittsfläche (36a-d) und die axiale lichte Gesamtdurchtrittsfläche (44a-d) im Wesentlichen gleich groß sind.

6. Bundbuchse nach einem oder mehreren der vorangegangenen Ansprüche, **dadurch gekennzeichnet, dass** sie mindestens eine Öffnungserweiterung (24) aufweist, bei welcher eine axiale lichte Durchtrittsfläche (44a, b, c, d) und eine radiale Durchtrittsfläche (36a, b, c, d) im Wesentlichen gleich groß sind.

7. Bundbuchse nach einem oder mehreren der vorangegangenen Ansprüche, **dadurch gekennzeichnet, dass** sich die Öffnungserweiterung (24) in radialer Richtung bis höchstens zum 0,5-fachen, insbesondere bis höchstens zum 0,4-fachen der radialen Breite des Axiallagerteils (14) erstreckt.

8. Bundbuchse nach einem oder mehreren der vorangegangenen Ansprüche, **dadurch gekennzeichnet, dass** zwei, drei oder vier Öffnungserweiterungen (24) vorgesehen sind und diese in Umfangsrichtung (18) vorzugsweise äquidistant zueinander angeordnet sind.

9. Bundbuchse nach einem oder mehreren der vorangegangenen Ansprüche, **dadurch gekennzeichnet, dass** der Radiallagerteil (12) eine Stützschicht (26) und eine Gleitschicht (30) aufweist und der Axiallagerteil (14) eine Stützschicht (28) und eine Gleitschicht (32) aufweist.

10. Bundbuchse nach Anspruch 9, **dadurch gekennzeichnet, dass** die Gleitschicht (30, 32) eine auf der Stützschicht festgelegte poröse Verankerungsschicht, insbesondere aus Bronze, insbesondere in Form einer Sinterschicht, umfasst, in die das Polymer basierte Gleitschichtmaterial eingebracht ist.

11. Bundbuchse nach Anspruch 9 oder 10, **dadurch gekennzeichnet, dass** die Gleitschicht (30, 32) des Radiallagerteils (12) und des Axiallagerteils (14) verschiedene Polymer basierte Gleitschichtmaterialien aufweisen, insbesondere der Radiallagerteil (12) ein PEEK basiertes Gleitschichtmaterial und der Axiallagerteil (14) ein PTFE basiertes Gleitschichtmaterial aufweisen.

12. Bundbuchse nach einem oder mehreren der vorangegangenen Ansprüche, **dadurch gekennzeichnet, dass** der Axiallagerteil (14) mittels mindestens einer Schweiß- oder Lötverbindung, an den Radiallagerteil (12) angefügt ist.

13. Verfahren zur Herstellung einer gebauten Bundbuchse nach einem der Ansprüche 1 bis 12 mit folgenden Schritten: Herstellen des zylindrischen Radiallagerteils (12) durch Rollbiegen eines streifenförmigen Flachmaterialabschnitts; Herstellen des ringscheibenförmigen Axiallagerteils (14) durch Stanzen der Wellendurchgangsöffnung (16) in ein planes Werkstück; und stoffschlüßiges Verbinden des Radiallagerteils (12) und des Axiallagerteils (14), **dadurch gekennzeichnet, dass** beim Stanzen der Wellendurchgangsöffnung (16) ein Stempel verwendet wird, der die Wellendurchgangsöffnung (16) mit wenigstens einer radial auswärts gerichteten Öffnungserweiterung (24) ausstanzt, und sich diese Öffnungserweiterung (24) in radialer Richtung (22) über den äußeren Umfang (23) des Radiallagerteils (12) hinaus erstreckt.

## Claims

1. An assembled flange bearing (10) for supporting a drive shaft (38) in a diesel injection pump, having a cylindrical radial bearing part (12) and an annular-disk-shaped axial bearing part (14), which axial bearing part is built in one piece in a circumferential direction (18) and is materially and nondetachably joined to the radial bearing part (12) and nondetachably and has a shaft passageway opening (16), wherein beginning at the shaft passageway opening (16) at least one radially outward-oriented widening (24) of the opening, encompassing a total material thickness (21) of the axial bearing part (14), is provided in the axial bearing part (14), **characterized in that** the widening (24) of the opening extends in a radial direction (22) past an outer circumference (23) of the radial bearing part (12); and that the flange bearing has an axial clear total passage area (44a-d) of the widening (24) of the opening, extending from the circumference (23) outward in the radial direction (22), of between 10 mm² and 60 mm² and has a radial total passage area (36a-d) of the widening (24) of the opening with an area of between 10 mm² and 60 mm².

2. The flange bearing of claim 1, **characterized in that** the widening (24) of the opening has a cross section which is in the shape of a rectangle with rounded corners or of a segment of a circle.

3. The flange bearing of claim 1 or claim 2, **characterized in that** the axial clear total passage area (44a-d) extending outward in the radial direction (22) amounts to between 15 mm² and 50 mm² and more particularly between 20 mm² and 40 mm².

4. The flange bearing of one or more of the foregoing claims, **characterized in that** the radial total passage area (36a-d) amounts to between 15 mm² and 50 mm², and more particularly between 20 mm² and 40 mm².

5. The flange bearing of one or more of the foregoing claims, **characterized in that** the radial total passage area (36a-d) and the axial clear total passage area (44a-d) are essentially of equal size.

6. The flange bearing of one or more of the foregoing claims, **characterized in that** it has at least one widening (24) of the opening, in which an axial clear passage area (44a, b, c, d) and a radial passage area (36a, b, c, d) are essentially of equal size.

7. The flange bearing of one or more of the foregoing claims, **characterized in that** the widening (24) of the opening extends in the radial direction to at most 0.5 times, and in particular up to at most 0.4 times, the radial width of the axial bearing part (14).

8. The flange bearing of one or more of the foregoing claims, **characterized in that** two, three or four widenings (24) of the opening are provided, and these being located preferably equidistant from one another in the circumferential direction (18).

9. The flange bearing of one or more of the foregoing claims, **characterized in that** the radial bearing part (12) has a bracing layer (26) and a sliding layer (30), and the axial bearing part (14) has a bracing layer (28) and a sliding layer (32).

10. The flange bearing of claim 9, **characterized in that** the sliding layer (30, 32) includes a porous anchoring layer affixed to the bracing layer, the anchoring layer being in particular of bronze, in particular in the form of a sintered layer, into which the polymer-based sliding layer material is introduced.

11. The flange bearing of claim 9 or 10, **characterized in that** the sliding layer (30, 32) of the radial bearing part (12) and of the axial bearing part (14) have different polymer-based sliding layer materials, and in particular the radial bearing part (12) has a PEEK-based sliding layer material, and the axial bearing part (14) has a PTFE-based sliding layer material.

12. The flange bearing of one or more of the foregoing claims, **characterized in that** the axial bearing part (14) is joined to the radial bearing part (12) by means of at least one welded or soldered connection.

13. A method for producing an assembled flange bearing of one of claims 1 through 12 having the following steps: producing the cylindrical radial bearing part (12) by roll-bending of a striplike piece of flat material; producing the annular-disklike axial bearing part (14) by stamping the shaft passageway opening (16) into a planar workpiece; and materially joining the radial bearing part (12) and axial bearing part (14), **characterized in that** in the stamping of the shaft passageway opening (16), a die is used which stamps out the shaft passageway opening (16) with at least one radially outward-oriented widening (24) of the opening, and this widening (24) of the opening extends in the radial direction (22) past the outer circumference (23) of the radial bearing part (12).

## Revendications

1. Douille à collet (10) assemblée destinée à loger un arbre d'entraînement (38) dans une pompe d'injection diesel, comprenant une partie de palier radial (12) cylindrique et une partie de palier axial (14) en forme de disque annulaire qui est réalisée en une seule pièce dans une direction circonférentielle (18) et est jointe par liaison de matière et de façon inamovible à la partie de palier radial (12) et présente une ouverture de passage d'arbre (16), dans lequel, à partir de ladite ouverture de passage d'arbre (16), au moins une extension d'ouverture (24) dirigée radialement vers l'extérieur et occupant toute une épaisseur de matériau (21) de la partie de palier axial (14) est prévue dans la partie de palier axial (14), **caractérisée par le fait que** ladite extension d'ouverture (24) s'étend dans une direction radiale (22) au-delà d'une circonférence extérieure (23) de la partie de palier radial (12) et que la douille à collet présente une surface de passage totale axiale libre (44a-d) de l'extension d'ouverture (24), qui s'étend vers l'extérieur à partir de la circonférence (23) dans la direction radiale (22) et est comprise entre 10 mm² et 60 mm², et présente une surface de passage totale radiale (36a-d) de l'extension d'ouverture (24) ayant une surface comprise entre 10 mm² et 60 mm².

2. Douille à collet selon la revendication 1, **caractérisée par le fait que** l'extension d'ouverture (24) présente une section transversale qui présente la forme d'un rectangle à coins arrondis ou d'un segment de cercle.

3. Douille à collet selon la revendication 1 ou la revendication 2, **caractérisée par le fait que** la surface de passage totale axiale libre (44a-d) s'étendant vers l'extérieur à partir de la circonférence (23) dans la direction radiale (22) est comprise entre 15 mm² et 50 mm² et plus particulièrement entre 20 mm² et 40 mm².

4. Douille à collet selon l'une ou plusieurs des revendications précédentes, **caractérisée par le fait que** la surface de passage totale radiale (36a-d) est comprise entre 15 mm² et 50 mm² et plus particulièrement entre 20 mm² et 40 mm².

5. Douille à collet selon l'une ou plusieurs des revendications précédentes, **caractérisée par le fait que** la surface de passage totale radiale (36a-d) et la surface de passage totale axiale libre (44a-d) présentent pour l'essentiel la même taille.

6. Douille à collet selon l'une ou plusieurs des revendications précédentes, **caractérisée par le fait qu'**elle présente au moins une extension d'ouverture (24) dans laquelle une surface de passage axiale libre (44a, b, c, d) et une surface de passage radiale (36a, b, c, d) présentent pour l'essentiel la même taille.

7. Douille à collet selon l'une ou plusieurs des revendications précédentes, **caractérisée par le fait que** l'extension d'ouverture (24) s'étend dans la direction radiale jusqu'à 0,5 fois tout au plus, en particulier jusqu'à 0,4 fois tout au plus, la largeur radiale de la partie de palier axial (14).

8. Douille à collet selon l'une ou plusieurs des revendications précédentes, **caractérisée par le fait que** deux, trois ou quatre extensions d'ouverture (24) sont prévues et que celles-ci sont disposées de préférence à distance égale les unes par rapport aux autres dans la direction circonférentielle (18).

9. Douille à collet selon l'une ou plusieurs des revendications précédentes, **caractérisée par le fait que** la partie de palier radial (12) présente une couche de support (26) et une couche de glissement (30) et que la partie de palier axial (14) présente une couche de support (28) et une couche de glissement (32).

10. Douille à collet selon la revendication 9, **caractérisée par le fait que** la couche de glissement (30, 32) comprend une couche d'ancrage poreuse fixée sur la couche de support, en particulier en bronze, en particulier sous forme d'une couche frittée dans laquelle est introduit le matériau de couche de glissement à base de polymère.

11. Douille à collet selon la revendication 9 ou 10, **caractérisée par le fait que** la couche de glissement (30, 32) de la partie de palier radial (12) et de la partie de palier axial (14) présentent des matériaux différents de couche de glissement à base de polymère, que, en particulier, la partie de palier radial (12) présente un matériau de couche de glissement à base de PEEK et la partie de palier axial (14) présente un matériau de couche de glissement à base de PTFE.

12. Douille à collet selon l'une ou plusieurs des revendications précédentes, **caractérisée par le fait que** la partie de palier axial (14) est jointe à la partie de palier radial (12) au moyen d'au moins un joint soudé ou brasé.

13. Procédé de fabrication d'une douille à collet assemblée selon l'une quelconque des revendications 1 à 12, comprenant les étapes suivantes: fabriquer la partie de palier radial (12) cylindrique par roulage d'une portion de matériau plat en forme de bande; fabriquer la partie de palier axial (14) en forme de disque annulaire en découpant l'ouverture de passage d'arbre (16) dans une pièce plane; et relier par liaison de matière la partie de palier radial (12) et la partie de palier axial (14), **caractérisé par le fait que**, lors du découpage de l'ouverture de passage d'arbre (16), on utilise un poinçon qui découpe l'ouverture de passage d'arbre (16) avec au moins une extension d'ouverture (24) dirigée radialement vers l'extérieur, et que cette extension d'ouverture (24) s'étend dans la direction radiale (22) au-delà de la circonférence extérieure (23) de la partie de palier radial (12).
